(19) Europäisches Patentamt
European Patent Office
Office européen des brevets

(11) EP 3 461 084 A1

(12) EUROPEAN PATENT APPLICATION

(43) Date of publication:
27.03.2019 Bulletin 2019/13

(51) Int Cl.:
H04L 12/863 (2013.01)    H04L 12/935 (2013.01)

(21) Application number: 17306233.2

(22) Date of filing: 21.09.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: InterDigital CE Patent Holdings
75017 Paris (FR)

(72) Inventors:
• ARAVAMUDAN, Srivathsan
600096 Chennai (IN)
• KUMAR, Dinesh
600083 Chennai (IN)

(74) Representative: Amor, Rim et al
InterDigital CE Patent Holdings
20, rue Rouget de Lisle
92130 Issy-les-Moulineaux (FR)

(54) **METHOD AND APPARATUS FOR IMPLEMENTING EFFICIENT QUALITY OF SERVICE (QOS) THROUGH FEEDBACK FLOW LOOP IN A SOFTWARE ACCELERATOR**

(57) A method and apparatus are described including receiving a packet of data, determining if a flow rule exists for the received packet of data, creating a flow rule for the received packet of data, if the flow rule does not exist for the received packet of data and adding the received packet of data to a first queue based on the flow rule.

Fig. 3

## Description

FIELD

The present principle relates to a fast scheduling method implemented using a software accelerator. The proposed fast scheduling method also handles QoS and congestion management.

BACKGROUND

In unicast, multicast and broadcast applications, data are transmitted from a server to receiver(s) over wired and/or wireless networks. A unicast system as used herein is a system where information is sent from one point to another point, in other words a communication between a sender and a receiver. A multicast system as used herein is a system in which a server transmits the same data to multiple receivers simultaneously, where the receivers form a subset of all the receivers up to and including all of the receivers. A broadcast system is a system in which a server transmits the same data to all of the receivers simultaneously. That is, a multicast system by definition can include a broadcast system. Data/content is transmitted in packets or frames. Data/content includes audio, voice, video and/or any other form of multimedia content. The terms packet and frame are used interchangeably herein to indicate any format used to contain data/content. As used herein consumer premises equipment (CPE) includes but is not limited to a node or a client device. A CPE can be a wireless terminal, a wireless device, a mobile terminal or mobile device, such as but not limited to, a computer, a laptop, a personal digital assistant, (PDA), a dual mode smart phone. CPE may also be a gateway, a router, a bridge or a brouter.

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that, these statements are to be read in this light.

Current solutions implement QoS based on vendor provided hardware capabilities and implements several scheduling algorithms. In today's scenarios, these methods are not efficient. A fresh approach for QoS implementation is needed. A fresh approach will handle current needs such as increased connections and congestion. Configuring the QoS is static or accomplished by advanced users of the device. With new user interface/user experience (UI/UX) voice and mobile applications being introduced, these features will be used by novice users as well. A person using a voice interface can use QoS to modify the priority for that application.

SUMMARY

The proposed mechanism uses features available on a network card to implement a dynamic QoS mechanism that will allow users to configure QoS for the dynamic needs of the applications. Implementing a software scheduler will put a greater strain on compute requirements of a gateway and thus, also affect throughput. The proposed mechanism implements a software scheduler that uses feedback derived from flow rules and congestion.

The proposed mechanism may help to provide efficient QoS implementation, increased throughput with or without QoS, an improved user experience for traffic classes, no need to sort the packets by the ingress scheduler and expansion of traffic classes.

In a software accelerator, the processing capacity of the core needs to be sliced. Typically, a generic packet processor spends 20% of its time on packet ingress, 60% of its time on packet processing and a final 20% of its time on packet egress. Typically, an ingress scheduler increases the computation requirements of the ingress portion of a packet processor. The proposed mechanism, however, includes an optimal method for achieving QoS using feedback loops, wherein the poll table is sorted instead of the ingress packets. The proposed mechanism also uses hybrid scheduling that uses a variable burst size derived from the number and type of traffic class and its latency requirements implemented using deadline based packet processing.

A router is a device that provides an interface between two networks, such as WANs, LANs, MANs, VLANs, etc. In the context of the proposed method and apparatus a router can be thought of as an autonomous device that handles network packets. A scheduler is an entity (component, module) within the router, which supports and helps in the processing of network packets. There may be more than one scheduler in the router. For example, there may be an ingress scheduler and an egress scheduler.

In a first aspect, a method is described including receiving a packet of data, determining if a flow rule exists for the received packet of data, creating a flow rule for the received packet of data, if the flow rule does not exist for the received packet of data and adding the received packet of data to a first queue based on the flow rule.

In an embodiment, the received packet of data is received from a second queue of a first scheduler.

In an embodiment, the first queue is an egress queue and the second queue is an ingress queue.

In an embodiment, the method further comprises configuring flow steering for the received packet of data based on the flow rule, adding information to a poll table responsive to the flow steering, the information including at least a destination port number, a destination internet protocol address and an egress queue identifier and determining a next burst size responsive to a traffic class that exists in a table and latency requirements of the traffic class implemented using deadline based packet processing.

In an embodiment, the method further comprises adding a congestion flag to the information.

In an embodiment, the method further comprises adding a number of flows in the egress queue to the information.

In an embodiment, the poll table is used to implement a scheduler that polls a plurality of queues in the poll table in an order responsive to the burst size and the congestion flag.

In an embodiment, the method comprises adding the received packet of data to the second queue.

In a second aspect, an apparatus is described including means for receiving a packet of data, means for determining if a flow rule exists for the received packet of data, means for creating a flow rule for the received packet of data, if the flow rule does not exist for the received packet of data and means for adding the received packet of data to a first queue based on the flow rule.

In an embodiment, the received packet of data is received from a second queue of a first scheduler and further wherein the first queue is an egress queue and the second queue is an ingress queue.

In an embodiment, the apparatus further comprises means for configuring flow steering for the received packet of data based on the flow rule, means for adding information to a poll table responsive to the flow steering, the information including at least a destination port number, a destination internet protocol address and an egress queue identifier and means for determining a next burst size responsive to a traffic class that exists in a table and latency requirements of the traffic class implemented using deadline based packet processing.

In an embodiment, the apparatus further comprises adding a congestion flag to the information.

In an embodiment, the apparatus further comprises adding a number of flows in the egress queue to the information.

In an embodiment, the poll table is used to implement a scheduler that polls a plurality of queues in the poll table in an order responsive to the burst size and the congestion flag.

In an embodiment, the apparatus further comprises adding the received packet of data to the second queue.

Some processes of embodiments may be computer implemented. Accordingly, such elements may take the form of an entirely hardware embodiment, an entirely software embodiment (including firmware, resident software, microcode, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of embodiments can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

BRIEF DESCRIPTION OF THE DRAWINGS

The proposed method and apparatus is best understood from the following detailed description when read in conjunction with the accompanying drawings. The drawings include the following figures briefly described below:

Fig. 1A is a block diagram of an exemplary software router including the main components of the accelerated software router in accordance with the principles of the proposed method and apparatus.

Fig. 1B is a block diagram of an exemplary slow path portion of the exemplary software router in accordance with the principles of the proposed method and apparatus.

Fig. 2 shows a 5-tuple representing a flow or path.

Fig. 3 is a flowchart of an exemplary embodiment of the slow path and the fast path in accordance with the principles of the proposed method.

Fig. 4 shows an exemplary ingress scheduler with one LAN port.

Fig. 5 is the flowchart of Fig. 3 modified and updated to account for QoS of the proposed method.

Fig. 6 is a flowchart of an exemplary ingress scheduler including congestion control in accordance with the principles of the proposed method.

Fig. 7 is a flowchart of an exemplary embodiment showing flow creation and flow steering in accordance with the principles of the proposed method.

Fig. 8 shows an example of congestion thresholds.

It should be understood that, the drawing(s) are for purposes of illustrating the concepts of the disclosure and is not necessarily the only possible configuration for illustrating the disclosure.

DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not, such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

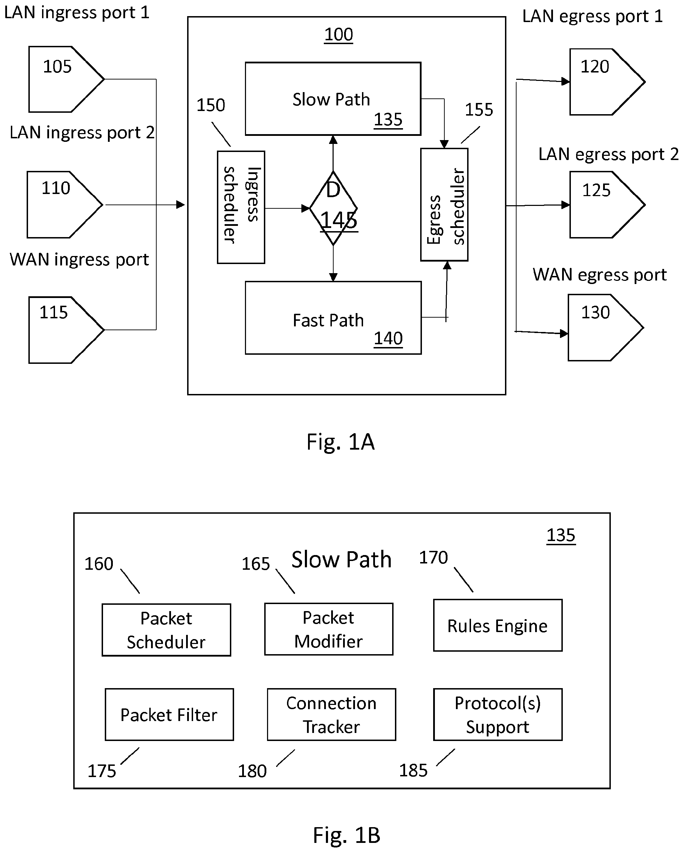

Fig. 1A is a block diagram of an exemplary software router including the main components of the accelerated software router in accordance with the principles of the proposed method and apparatus. A software router is program responsible for handling packets. A network address translation (NAT) router receives packets from a local area network (LAN) and performs address translation and send (forwards) packets to a wide area network (WAN) and vice versa. In order to handle bi-directional traffic (packets), the software router receives packets from both LAN and WAN Ports. The software router receives packets from a source port, performs network address translation and forwards the packets to a destination port. Generic software router/generic virtual router (100) receives input (packets) from LAN ingress port 1 (105), LAN ingress port 2 (110), and WAN ingress port (115). Generic software router 100 forwards the processed packets to LAN egress port 1 (120), LAN egress port 2 (125) and WAN egress port (130). Packets are received by the ingress scheduler 150. The ingress scheduler performs a look-up in the flow table to determine if the <port, queue> pair is in the flow table. The received packets are forwarded (passed) to a decision point 145. The decision may be made within the ingress scheduler or in a separate module (component) such as 145. The ingress scheduler 150 also sorts the received packets. If the <port, queue> pair is in the flow table, then the <port, queue> pair will be processed by the fast path 140. The fast path adds the packet to the appropriate egress queue. The fast path may also add or clear (remove) a congestion flag to the <port, queue> pair in the poll table. The fast path may also increment the number of flows to the <port, queue> pair in the poll table. If the <port, queue> pair is not in the flow table, then the <port, queue> pair will be processed by the slow path 135. The slow path creates a flow table rule for the packet, configures the flow steering, adds the <port, queue> pair to the poll table and calculate (determine) the next burst.

Fig. 1B is a block diagram of an exemplary slow path 135 portion of the exemplary software router in accordance with the principles of the proposed method and apparatus. In the slow path, the packet scheduler 160 receives the packet. Since the flow was not in the flow table, the rules engine 170 creates a new flow table rule for the packet. Once the rule is created, the packet modifier 165 modifies (NAT/other Translation) for the packet (if necessary). Packets that follow the slow path will be fed back into the fast path. At that point, the flow is then known and the modified data can be used to update the flow table with a new flow.

A protocol defines rules for communication. Each layer of the network stack has several supported protocols. A router must understand several protocols based on the type of router and complexity of both the router and the protocol. Each protocol is implemented as a protocol support module (185). The packet filtering module (175) is a used primarily to implement the firewall. A node transmits a packet, which can be filtered and matched with the predefined set of rules and policies. When there is a match, then the packet is either accepted or denied. Each rule is a set of conditions the packet must meet. The set of conditions could be a 5-tuple or could be any field in the packet. Packet filtering can be either state full or stateless. The state full packet filtering occurs where the state of the packet (NEW, ESTABLISHED, RELATED and INVALID) is tracked. The state is implemented through a connection tracker (180). The connection tracker has built-in support for tracking every protocol(s) supported in the system (185). Each protocol has a corresponding module in the connection tracker.

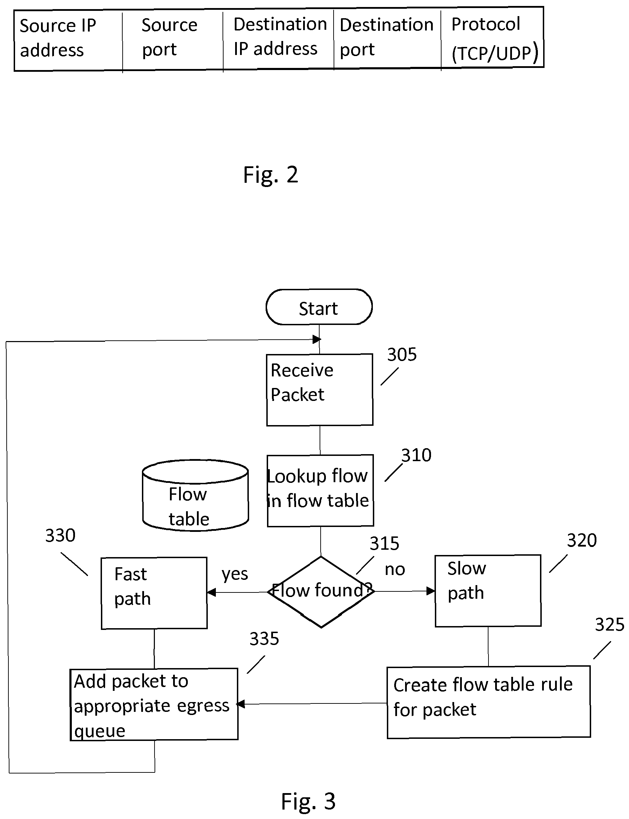

Fig. 2 shows a 5-tuple representing a flow or path. A flow is a path between a source device and a destination device. The 5-tuple shown in Fig. 2 includes a source internet protocol (IP) address, a source port, a destination IP address, a destination port and a protocol designator (identifier). The protocol may be a transmission control protocol (TCP) or a user datagram protocol (UDP). A TCP protocol is a connection oriented protocol and a UDP protocol is a connectionless protocol. Both TCP and UDP are transport layer protocols. TCP is an end-to-end protocol that provides an acknowledgement that provides a reliable, sequenced (ordered) and unduplicated delivery of the data (packets). UDP protocol provides potentially unreliable (best effort), unsequenced (out-of-order) and possibly duplicate delivery of the data (packets). UDP protocol typically does not provide an acknowledgement.

When a first packet enters the proposed software router, the flow is new and needs to be learned by the router in order for the router to take action. The proposed software router needs to pass the packet to the packet processor for learning the flow based on the rules configured by the user. This involves connection tracking, a firewall, and many other modules. This path taken by the packet in a network stack is called a slow path. Once the proposed software router determines that the packet is acceptable, the rules or blueprint for handling the packet are embedded in the packet or metadata and sent to the fast path. The software accelerator, upon receiving the packet creates a "rule" from the packet or metadata. The rule is stored in a table called the "Flow Table". The flow of the packet is determined by the control information in the packet header such as source address, destination address (either IP address or MAC address), source and destination ports, protocol type, service type and time-to-live. The flow table is a set of rules defined based on all or some on the above-mentioned packet parameters to define the action to be taken for the flow (2/4/5-tuple information).

The next packet of the same burst does not need to follow the slow path but rather handled and accelerated via a fast path. The proposed software router performs a lookup in the flow table and obtains the rules to perform the packet handling. Once the rule is fetched (retrieved) from the flow table, the proposed software router either modifies (NAT/other Translation) the packet and sends (forwards) the packet out, or drops the packet.

The slow path is a very complex software and in one embodiment, the Linux networking stack is used to implement and execute the slow path. Packets that follow the slow path will be fed back into the fast path. At that point, the flow is then known and the modified data can be used to update the flow table with a new flow.

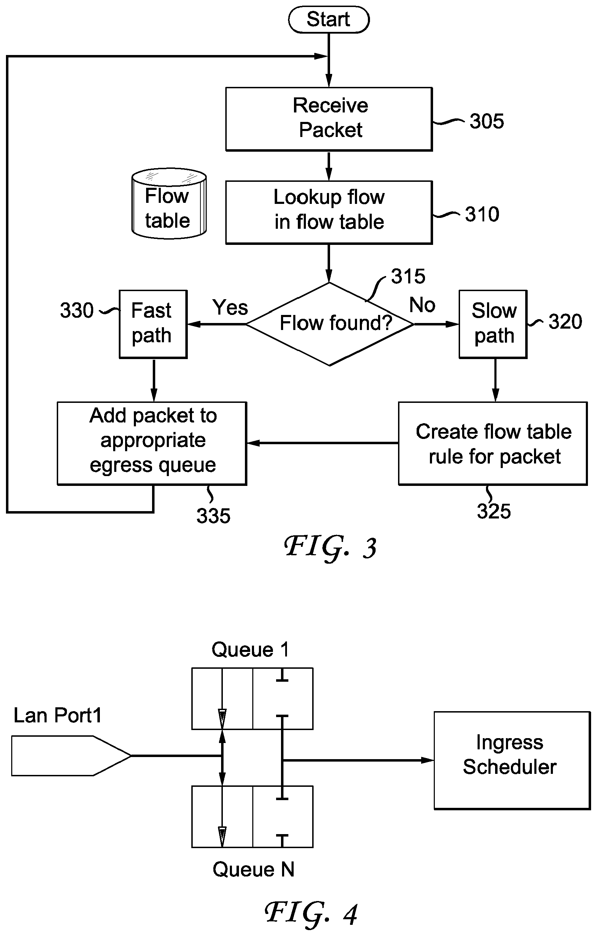

Fig. 3 is a flowchart of an exemplary embodiment of the slow path and the fast path in accordance with the principles of the proposed method. At 305 a new packet of a burst is received by the ingress scheduler. At 310 the flow is looked up in the flow table. The lookup is performed based on the control information in the packet header. At 315 a determination is made as to whether the flow was found in the flow table. If the flow was not found in the flow table then the packet will be sent (forwarded) to the slow path 320. At 325 a flow rule is created for the packet based on the control information in the packet header. Processing then proceeds to 335 to add the packet to the egress queue. If the flow was found in the lookup table then the packet will follow the fast path 330 and at 335 the packet is added (forwarded) to the appropriate egress queue. Both the slow path and the fast path processing, will be discussed further below. Once the packet has been added (forwarded) to the appropriate queue then the process returns to 305 to wait for the next packet of the burst to be received.

For achieving high performance, packets are processed in BULK / BURST. For instance, assuming a burst of 32. The receiver receives 0-32 packets of the burst. For each packet, the lookup and processing is performed. It is recommended that all packet processing implement bulk and burst modes so that high throughput is achieved.

The challenge is that in a multi-giga-bit edge router (for example: a 10 Gbps router) with a 64 Byte frame size (worst case Ethernet frame size) the packet arrival time is about 70ns. Thus, the proposed software router should be extremely fast to get, process and send (forward) the packet out or it is going to miss the packets. Sending the packet out is adding the packet to the appropriate queue based on the packet's traffic class so that it can be forwarded to the appropriate destination address and destination port at the proper priority. Every line of code that is added to the fast path increases complexity thereby reduces the throughput of the proposed software router.

To implement QoS along the fast path the following are needed,

1. Ingress Scheduler: The purpose of the scheduler is to order the packets for processing
2. Congestion Detection/Avoidance Module, such as WRED
3. Egress Scheduler

All the above modules are implemented in software. If the ingress scheduler implements packet sorting, the ingress scheduler will spend a lot of precious time in sorting the packets. Assuming the ingress scheduler has sorted the packets, not knowing that there is congestion in the egress scheduler queue, so the scheduler sorts the packet and the packet is modified. When the congestion module receives the packet, the congestion module drops the packet. All the work done for the packet is thrown down the drain and thus, has been a waste of computing resources.

To solve the above problems, a feedback loop is introduced to implement an ingress scheduler with low computation requirements. The feedback loop from the flow alters the burst size. Feedback from the congestion module regarding the status of the congestion is used to detect and avoid processing of the packets that are more likely to be dropped.

This proposed ingress scheduler uses a hardware capability called flow steering. The flow steering is a technique where a flow can be steered to a specific queue of a port.

By default, the flow lands at the default port queue, which is usually a low priority queue. When the flow is identified and classified, the flow can be configured to use a specific queue appropriate to its classification based on the 2/4/5-tuples and priority and/or traffic class. For example, the voice traffic goes to queue 0, and video traffic to queue 1 etc. Once the packet is assigned to a queue, the next packet will be assigned follow the fast path to the appropriate queue. The flow steering is very important because the software ingress scheduler reads packets from the queue in order of occurrence in the poll table and ingress scheduler can only read a certain size of packets. Thus, the order impacts packet processing of the queue. If a queue is placed last in the poll table there is a chance the packets from that queue may not be processed at all. The flow steering is one implementation of hardware assistance. The proposed egress scheduler can work with other forms of hardware assistance, where hardware supports selective reading of packets from traffic classes.

A port is a physical entity where a network connection originates or terminates. A queue is a sub port within a port. An ingress port or egress port can have multiple queues. A port may have 1 to N queues. The port can be configured to distribute traffic between the queues or can be used to steer flows. This is done through special API's available through the device drivers. Typically, the destination IP address and port to recognize the flow and steer the flow to an ingress queue.

The egress queue is used for hardware scheduling of the packets. Strict priority, WRR (weighted round robin) or Weighted Fair Queueing etc. are used. There are several algorithms available and can be configured through the device drivers.

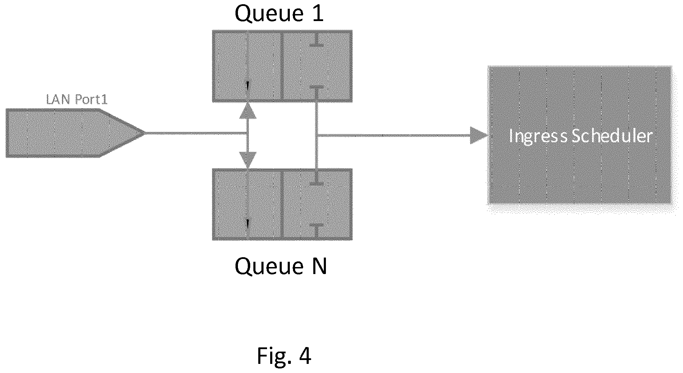

Fig. 4 shows an exemplary ingress scheduler with one LAN port. The LAN port shown in Fig. 4 has two queues but may have *n* queues. The ingress scheduler receives data in the form of packets from each queue of the port.

In a network, there are several types of traffic (packets) flowing through the network, which can be broadly put in any one of the following categories:

1. The default classes for the "to the WAN" direction are:

| Class | Class Name |
|---|---|
| 0 | Normal |
| 1 | Interactive |
| 2 | Network_Control |
| 3 | Video_Signal |
| 4 | Video_Data |
| 5 | Management |
| 6 | Voice_Signal |
| 7 | Voice_Data |

2. The default classes for the "to the LAN" direction are:

| Class | Class Name |
|-------|------------|
| 0 | Interactive_lan |
| 1 | Video_lan |
| 2 | Management_lan |
| 3 | Voice_lan |

Each traffic class has certain bandwidth, latency (delay) and priority requirements. If the sum of bandwidth of all LAN ports is equal to the available bandwidth of the WAN port then there are no QoS requirements required from the router. However, this is not the case for a home gateway. Thus, there is a requirement to selectively process packets and send the processed packets out through their assigned queues based on their priority and/or traffic class.

To assist the ingress scheduler, a new table is defined called a poll table. The poll table includes a list of all of the ports and queues in the ports. The scheduler needs to poll for the (data) packets. The poll table can be used by ingress scheduler for reading the packets from the queue based on any available scheduling algorithm and is not limited to what is explained below.

The poll table is thus ordered by priority and/or traffic class. For example, for a router with 1 LAN port and 1 WAN port with 4 queues the poll table looks like this. 0,0,1; 1,0,1; 0,1,1; 1,1,1; 0,2,1; 1,2,1; 0,3,1; 1,3,1; (<port number>, <Queue number>, <Number of Flows in the Queue>). This means that the scheduler polls the port 0 with queue 0 followed by port 1 with queue 0 and so on. That is, in the above example, queue 0 has a higher priority than queue 1 and, also the lower port numbers are higher in priority than the higher port numbers.

When the packets arrive from the slow path, the packets will have information regarding the traffic class (priority) of the packet. In addition to creating the flow in the flow table the following steps/acts are performed:

1. Add the <port, queue> pair to the poll table if it does not exist, increase the flow count if the port queue pair exists already in the poll table.
2. Configure the flow steering so that the flow will be steered to the desired <port, queue> pair.

It should be noted that adding a <port, queue> pair to the poll table adds overhead to the ingress scheduler, as it calls the read_burst() for each entry. This is the reason the poll table is kept to the minimum. When the flow terminates, the flow steering is removed and the poll table is updated to decrement the number of flows in the queue and remove the <port, queue> pair from the poll table if there are no flow references to the queue. The output of the ingress scheduler is a set of sorted packets as the poll table is listed in the order of priority. By design a packet sorting algorithm is implemented without sorting the packets.

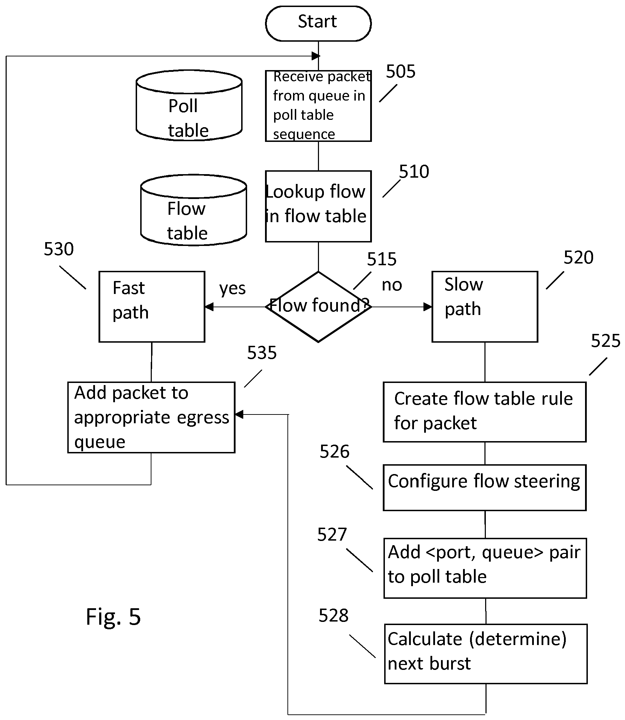

Fig. 5 is the flowchart of Fig. 3 modified and updated to account for QoS in accordance with the principles of the proposed method. At 505 a new packet of a burst is received by the ingress scheduler from the queue in the poll table sequence (order). At 510 the flow is looked up in the flow table. The lookup is performed based on the control information in the packet header. At 515 a determination is made as to whether the flow was found in the lookup table. If the flow was not found in the lookup table then the packet will follow the slow path 520. At 525 a flow rule is created for the packet based on the control information in the packet header. At 526 the flow steering is configured. At 527 the <port, queue> pair is added to the poll table. At 528 the next burst is calculated (determined). Processing then proceeds to 535 where the packet is added to the appropriate egress queue. If the flow was found in the lookup table then the packet will follow the fast path 530 and at 535 the packet is added (forwarded) to the appropriate egress queue. Once the packet has been added (forwarded) to the appropriate queue then the process returns to 505 to wait for the next packet of the burst to be received.

A burst is the total number of packets that an ingress scheduler can get. When it receives the necessary packets from the <port 0, queue 0> pair then it stops right there and proceeds to the stage of processing the packets. A higher burst size, the higher the throughput of the proposed software router but the higher the priority, the longer packets will be waiting in the queue. For latency (delay) sensitive packets, the packet itself may become irrelevant. Thus, reducing the burst size provides better latency but decreased overall throughput, and vice versa.

Burst size is the total packets that the ingress scheduler can fetch for processing in a loop. The intention is to retrieve (fetch) the packets from all the queues. For instance, assume that there are 3 ports with 1 queue per port. The poll table entry will look like 0,0; 1,0; 1,1. Also assume that the burst size is 128. The capacity of the scheduler is, thus, 128 packets per loop. Hypothetically, assume each queue produces 32 packets/loop.

When read_burst() is called, 32 packets are retrieved (fetched) from the port.

Here the burst length (burstlen) is 32 packets and the burst size (burstsize) initially is 128. This means an attempt is made to read 128 packets from the <port 0, queue 0> pair but the <port 0, queue 0> pair can produce 0 - 128 packets. With the assumption that only 32 packets are going to be available from the <port 0, queue 0> pair, the read_burst() will fetch only 32 packets. Hence the <port 0, queue 0> pair is polled the burstlen = 32, but the burst size = 128 - 32 = 96. The capacity is thus reduced after the first read_burst() has completed.

The <port 1, queue 0> pair will be polled next with the capacity 96. Again, the read_burst() will retrieve (fetch) 32 packets. After the read-burst() has completed then the burst size will be recalculated (re-determined) and will be 64 packets. Next, <port 2, queue 0> pair will be polled with the capacity of 64 packets. Again, the read_burst will produce 32 packets, the overall burst size will be 32. At the end of the loop the total capacity of the scheduler will be underutilized by 32.

If the same loop is executed with a burstsize = 64 and with the same hypothetical condition, then the <port 2, queue 0> pair will never be polled as the burstsize would have been saturated by the <port 0, queue 0> and <port 1, queue 0> pairs.

It should be noted that no port will receive packets constantly. The read_burst is a random process. That is how all the queues get a chance to receive packets. Thus, burstlen is random.

The dynamic burst size is an important aspect of the proposed scheduler. When calculating the burst, the scheduler will have to decide if it can process more packets and still honor the QoS requirements of the queues.

This is better explained by the following pseudo code for the ingress scheduler.

*Generic Version*

*BurstSize = X; //X=n packets per burst [Value filled in based on equation (1)]*

*FOR EACH QUEUE Q(j)*

    *FOR EACH PORT P(i)*

        *IF (BurstSize > 0 AND <Port (i), Queue (j)> pair exists in the poll table)*

            *BurstLen = read_burst (<Port (i), Queue (j)> pair, BurstSize)*

            *BurstSize -= BurstLen;*

        *END IF*

    *END FOR*

*END FOR*

The BurstSize -= BurstLen means that whenever the scheduler receives the packet form a queue the capacity of the scheduler is reduced.

A goal of the ingress scheduler is to get the packets in the sorted order of priority. Assuming the poll table contains the list of the <port, queue> pair in the order of priority, the proposed ingress scheduler, when receiving the packets, needs no additional operations for sorting the packets. In fact, very little time is spent on updating the poll table as the number of entries in the poll table is far fewer than the number of packets in a burst.

The burst size will be updated (re-computed, re-calculated, re-determined) at the end of loop using the following algorithm

*BurstSize = (if Priority TC in Flow) ? BurstSize/divider[tc]) : BurstSize_Original;*    *(1)*

The goal here is to reduce the burst size based on the highest priority packet present in the system. Each traffic class can have an ingress divider based on the latency (delay) requirements. Both the parameters can be easily obtained from the flow in the first timeslot.

For example, assume that there is a voice packet in the flow, when a call has been established. At that point of time the latency (delay) is reduced by frequently polling the port until the voice session (call) is torn down when the call ends. The burst is reset to normal after the call is terminated (ends).

When will the flow terminate? This depends on the traffic. For TCP, the final (FIN) packet terminates the connection. A flow may also be terminated by a timeout. The TCP timeout is typically 180 seconds. For UDP a flow is terminated by a timeout. When there is no packet for 30 seconds the rule expires for UDP.

The burst size is calculated (computed, determined) generously for general and specific traffic classes. To guarantee the latency (delay) deadline monotonous scheduling is added to the proposed mechanism. The deadline for each traffic class is calculated (computed, determined). Burst processing is completed if the deadline is not exceeded. That is, the burst size is determined based on the traffic class and the latency requirements of the traffic class implemented using deadline based packet processing.

Only the processed packets are forwarded (sent) to the egress queues. The deadline check occurs at the processing stage, which is still in the scheduler queue. The limit of the scheduler queue is the burst size calculated (computed, determined) at the end of the processing stage. Below is the pseudo code for an embodiment of the limit check

### *Get Packet ( N \*2 Calculated from the limit MAX_BURST)*

#### *For Each Packet*

##### *IF(Deadline NOT Exceeding)*

###### *Process Packet*

#### *ELSE*

##### *Drop remaining packets.*

#### *End For*

The proposed mechanism creates a feedback loop between the egress and ingress scheduler. The egress scheduler is usually implemented in the hardware. One problem is "How is feedback obtained from the hardware egress scheduler?" Another problem is "How is the data from the hardware egress scheduler being used at the ingress scheduler?" A congestion detection and avoidance algorithm, such as WRED is used. Usually a congestion and avoidance algorithm is used to avoid congestion. However, in the proposed mechanism, the congestion and avoidance algorithm is used to get feedback about the congestion. During periods of no congestion there will be no impact to the proposed ingress scheduler. During periods of slight congestion, the burst size for that queue will be halved. During periods of extreme congestion, the queue will be removed from the poll table.

WRED stands for weighted random early detection. A queue may have lower thresholds for lower priority packets (traffic). A queue buildup will cause the lower priority packets (traffic) to be dropped. This protects higher priority packets (traffic). UDP traffic (packets) will be dropped more often than TCP traffic (packets) since UDP packets (traffic) is usually considered best effort traffic (packets).

The poll table can be updated with the number of flows in the queue and the congestion flag thus making the <port (i), queue (j)> pair into a 4-tuple by adding the number of flows in the queue and the congestion flag. An exemplary updated poll table including a congestion flag would be <port (i), queue (j), <number of flow in the queue>,congestion flag (k)>:

0,0,5,0; 1,0,2,0; 0,1,1,1; 1,1,3,1; 0,2,10,2; 1,2,20,2; 0,3,25,0; 1,3,1000,0

The above example shows that the <port 0, queue 1> pair and the <port 1, queue 1> pair are slightly congested.

Exemplary pseudo code of the proposed ingress scheduler is as follow:

*BurstSize = X; //X= n packets per burst[Value filled in based on equation (1)]*

*FOR EACH QUEUE Q(j)*

*FOR EACH PORT P(i)*

*IF (BurstSize > 0 AND <port (i), queue(j)> Exists in the poll table)*

*If Extreme Congestion (congestion flag=2)BurstLen =*

*0; // Skip on extreme congestion*

*Else IF NO Congestion (congestion flag = 0)*

*BurstLen = read_burst (<port (i), queue(j)>, BurstSize)*

*Else slight Congestion (congestion flag = 1)*

*BurstLen = read_burst(<port (i), queue (j)>, BurstSize/2)*

*END IF*

*BurstSize -= BurstLen;*

*END IF*

*END FOR*

*END FOR*

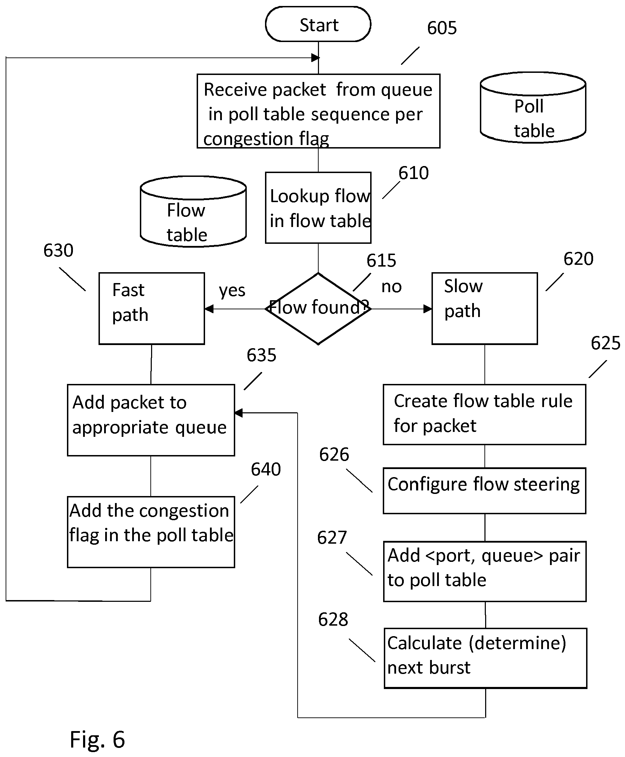

Fig. 6 is a flowchart of an exemplary ingress scheduler including congestion control in accordance with the principles of the proposed invention. Fig. 6 is the flowchart of Fig. 5 modified and updated to account for congestion in accordance 6ith the principles of the proposed method. At 605 a new packet of a burst is received by the ingress scheduler from queue in poll table sequence per congestion flag. At 610 the flow is looked up in the flow table. The lookup is performed based on the control information in the packet header. At 615 a determination is made as to whether the flow was found in the lookup table. If the flow was not found in the lookup table then the packet will follow the slow path 620. At 625 a flow rule is created for the packet based on the control information in the packet header. At 626 the flow steering is configured. At 627 the <port, queue> pair is added to the poll table. At 628 the next burst is calculated (determined). Processing then proceeds to 635 where the packet is added (forwarded) to the appropriate egress queue. At 640 a congestion flag is added to the poll table. In an exemplary embodiment, the congestion flag is 0 if there is no congestion, 1 if there is slight congestion and 2 if there is extreme congestion. Adding a congestion flag assumes that the amount of congestion for the queue has been determined and that for each level of congestion a threshold value exists. Once the packet has been added (forwarded) to the appropriate queue then the process returns to 605 to wait for the next packet of the burst to be received.

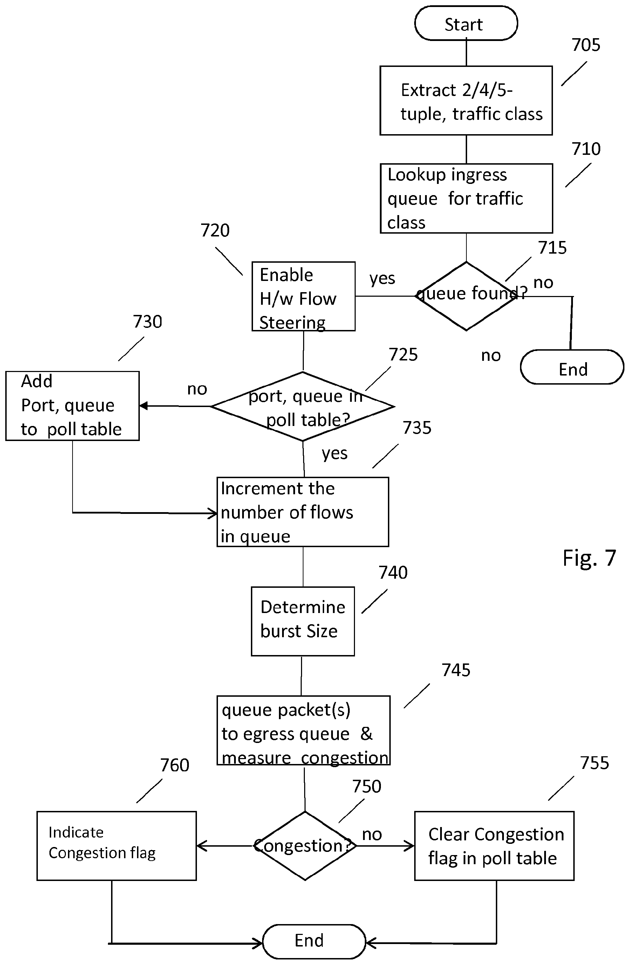

Fig. 7 is a flowchart of an exemplary embodiment showing flow creation and flow steering in accordance with the principles of the proposed method. At 705 the 2/4/5-tuple is extracted for the traffic class. At 710 a lookup in the ingress queue is performed to determine the destination queue for the traffic class. At 715 a test is performed to determine if the queue is found. If the queue is not found (located) then processing ends. If the queue is found (located) then at 720 hardware flow steering is enabled. At 725 a test is performed to determine is the <port, queue> pair is found (located) in the poll table. If the <port, queue> pair is not found (located) in the poll table then at 730 the <port, queue> pair is added to the poll table. Processing then proceeds to 735. If the <port, queue> pair is found (located) in the poll table then at 735 the number of lows in the queue is incremented. At 740 the burst size is determined (calculated, computed). That is, the burst size is determined based on the traffic class and the latency requirements of the traffic class implemented using deadline based packet processing. At 745 the packet(s) are queued to the egress queue and the congestion is measured. At 750 a test is performed to determine if there is any congestion. If there is no congestion then at 755 the congestion flag is cleared in the poll table for this <port, queue> pair then processing ends. If there is congestion then at 760 the congestion flag is set for this <port, queue> pair. There are two types of congestion. On slight congestion the quota for the <Port, Queue> pair is halved and on extreme congestion the <port, queue> is skipped until the congestion state is changed to slight or no congestion.

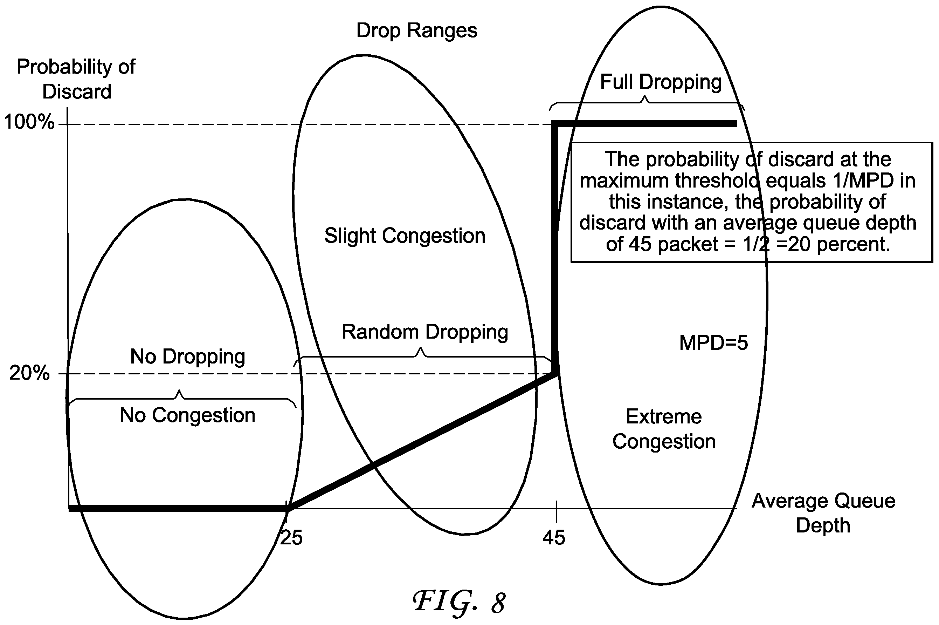

Fig. 8 is an example of congestion thresholds. WRED is an extension of random early detection (RED). The average queue size depends on the previous average as well as the current size of the queue. The probability of discard at the maximum threshold equals 1/MPD.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

For purposes of this application and the claims, using the exemplary phrase "**at least one** of A, B **and** C," the phrase means "only A, or only B, or only C, or any combination of A, B and C."

**Claims**

1. A method comprising:

   receiving (305,505, 605) a packet of data;
   determining (310, 510, 610) if a flow rule exists for said received packet of data;
   creating (325, 525, 625) a flow rule for said received packet of data, if said flow rule does not exist for said received packet of data; and
   adding (335, 535, 635) said received packet of data to a first queue based on said flow rule.

2. The method according to claim 1, wherein said received packet of data is received from a second queue of a first scheduler.

3. The method according to claim 1 or 2, wherein said first queue is an egress queue and said second queue is an ingress queue.

4. The method according to claim 2 or 3, further comprising:

   configuring (526) flow steering for said received packet of data based on said flow rule;
   adding (527) information to a poll table responsive to said flow steering, said information including at least a destination port number, a destination internet protocol address and an egress queue identifier; and
   determining (528) a next burst size responsive to a traffic class that exists in a table and latency requirements of said traffic class implemented through deadline based packet processing.

5. The method according to claim 4, further comprising adding (640) a congestion flag to said information.

6. The method according to any one of claims 3 to 5, further comprising adding (735) a number of flows in said egress queue to said information.

7.  The method according to claims 4 to 6, wherein said poll table is used to implement a scheduler that polls a plurality of queues in said poll table in an order responsive to said burst size and said congestion flag.

8.  The method according to claims 4 to 7, further comprising adding said received packet of data to said second queue.

9.  An apparatus, comprising:

    means for receiving (150) a packet of data;
    means for determining (145, 150) if a flow rule exists for said received packet of data;
    means for creating (135) a flow rule for said received packet of data, if said flow rule does not exist for said received packet of data; and
    means for adding (140) said received packet of data to a first queue based on said flow rule.

10. The apparatus according to claim 9, wherein said received packet of data is received from a second queue of a first scheduler and further wherein said first queue is an egress queue and said second queue is an ingress queue.

11. The apparatus according to claim 9 or 10, further comprising:

    means for configuring (135) flow steering for said received packet of data based on said flow rule;
    means for adding (135) information to a poll table responsive to said flow steering, said information including at least a destination port number, a destination internet protocol address and an egress queue identifier; and
    means for determining (135) a next burst size responsive to a traffic class that exists in a table and latency requirements of said traffic class implemented through deadline based packet processing.

12. The apparatus according to claim 11, further comprising means for adding (140) a congestion flag to said information.

13. The apparatus to claim 11 or 12, further comprising means for adding (140) a number of flows in said egress queue to said information and/or means for adding said received packet of data to said second queue.

14. The apparatus according to claims 11 to 13, wherein said poll table is used to implement a scheduler that polls a plurality of queues in said poll table in an order responsive to said burst size and said congestion flag.

15. A computer-readable medium comprising instructions which, when executed by a computer, cause the computer to carry out the method of any of claims 1 to 8

LAN ingress port 1

LAN egress port 1

```
105 >
```

LAN ingress port 2

```
110 >
```

WAN ingress port

```
115 >
```

```
100
```

150

Slow Path
135

155

Ingress scheduler

D
145

Egress scheduler

Fast Path
140

LAN egress port 1

```
120 >
```

LAN egress port 2

```
125 >
```

WAN egress port

```
130 >
```

Fig. 1A

135

160

165    Slow Path

170

| Packet Scheduler | Packet Modifier | Rules Engine |

| Packet Filter | Connection Tracker | Protocol(s) Support |

175            180            185

Fig. 1B

| Source IP address | Source port | Destination IP address | Destination port | Protocol (TCP/UDP) |
|---|---|---|---|---|
| | | | | |

## Fig. 2

Fig. 3

Start

Receive
Packet — 305

Flow
table

Lookup flow
in flow table — 310

315
Flow found?

330 — Fast
path ← Yes

No → Slow
path — 320

Add packet to
appropriate
egress queue

← Create flow table
rule for packet

335

325

*FIG. 3*

Queue 1

Lan Port1

Ingress
Scheduler

Queue N

*FIG. 4*

Queue 1

LAN Port1

Ingress Scheduler

Queue N

Fig. 4

Fig. 5

Start — 605

Receive packet from queue in poll table sequence per congestion flag

Poll table

610
Lookup flow in flow table

Flow table

630
Fast path

615
yes — Flow found? — no

620
Slow path

625
Create flow table rule for packet

635
Add packet to appropriate queue

626
Configure flow steering

640
Add the congestion flag in the poll table

627
Add <port, queue> pair to poll table

628
Calculate (determine) next burst

Fig. 6

Start

Extract 2/4/5-
tuple, traffic class

705

Lookup ingress
queue  for traffic
class

710

720

Enable
H/w Flow
Steering

yes

queue found?

no

715

no

End

730

Add
Port, queue
to  poll table

no

port, queue in
poll table?

725

735

yes

Increment the
number of flows
in queue

Determine
burst Size

740

Fig. 7

queue packet(s)
to egress queue  &
measure  congestion

745

760

Indicate
Congestion flag

Congestion?

no

750

Clear Congestion
flag in poll table

755

End

Drop Ranges

Probability of Discard

Full Dropping

100%

The probability of discard at the maximum threshold equals 1/MPD in this instance, the probability of discard with an average queue depth of 45 packet = 1/2 =20 percent.

Slight Congestion

Random Dropping

No Dropping

MPD=5

20%

No Congestion

Extreme Congestion

25

45

Average Queue Depth

*FIG. 8*

EP 3 461 084 A1

Europäisches
Patentamt

European
Patent Office

Office européen
des brevets

# EUROPEAN SEARCH REPORT

Application Number

EP 17 30 6233

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 606 154 B1 (LEE CHUNG-CHIEH [US]) 20 October 2009 (2009-10-20) * page 2, column 4, line 3 - line 22 * * page 4, column 7, line 9 - line 46 * * page 4, column 7, line 65 - column 8, line 35 * * page 5, column 9, line 29 - column 10, line 20 * * page 6, column 11, line 63 - column 12, line 29 * * page 8, column 15, line 55 - page 9, column 18, line 4 * | 1-15 | INV. H04L12/863 H04L12/935 |
| X | WO 2014/141004 A1 (IBM [US]; IBM UK [GB]; IBM JAPAN [JP]) 18 September 2014 (2014-09-18) * paragraph [0053] - paragraph [0057] * * paragraph [0025] - paragraph [0027] * * paragraph [0066] - paragraph [0068] * * paragraph [0032] - paragraph [0039] * | 1-3 | |
| A | US 6 973 032 B1 (CASLEY ROSS T [US] ET AL) 6 December 2005 (2005-12-06) * page 3, column 5, line 35 - column 6, line 20 * | 7 | TECHNICAL FIELDS SEARCHED (IPC) H04L |
| A | US 6 515 963 B1 (BECHTOLSHEIM ANDREAS V [US] ET AL) 4 February 2003 (2003-02-04) * page 2, column 3, line 56 - column 4, line 17 * * page 4, column 8, line 17 - line 67; figure 8 * | 6 | |

The present search report has been drawn up for all claims

| Place of search | Date of completion of the search | Examiner |
|---|---|---|
| The Hague | 2 February 2018 | Tortelli, Michele |

EPO FORM 1503 03.82 (P04C01)

## ANNEX TO THE EUROPEAN SEARCH REPORT
## ON EUROPEAN PATENT APPLICATION NO.

EP 17 30 6233

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2018

| Patent document cited in search report | | Publication date | Patent family member(s) | | Publication date |
|---|---|---|---|---|---|
| US 7606154 | B1 | 20-10-2009 | NONE | | |
| WO 2014141004 | A1 | 18-09-2014 | US | 2014269288 A1 | 18-09-2014 |
| | | | WO | 2014141004 A1 | 18-09-2014 |
| US 6973032 | B1 | 06-12-2005 | NONE | | |
| US 6515963 | B1 | 04-02-2003 | US | 6515963 B1 | 04-02-2003 |
| | | | US | 6829217 B1 | 07-12-2004 |

EPO FORM P0459

For more details about this annex : see Official Journal of the European Patent Office, No. 12/82